# EUROPEAN PATENT SPECIFICATION

(11) **EP 2 112 393 B1**
(45) Date of publication and mention of the grant of the patent: **05.06.2013**
(21) Application number: 09251145.0
(22) Date of filing: 22.04.2009
(51) Int. Cl.: F16D 48/06

(54) **Control device and control method for transmission mechanism, and control method for vehicle with engine**
Steuervorrichtung und Steuerverfahren für Getriebemechanismus und Steuerverfahren für Fahrzeug mit Motor
Dispositif de commande et procédé de commande pour mécanisme de transmission et procédé de commande pour véhicule à moteur

(30) Priority: 25.04.2008 JP 2008115726
(43) Date of publication of application: 28.10.2009
(73) Proprietor: Yamaha Hatsudoki Kabushiki Kaisha, Iwata-shi, Shizuoka 438-8501 (JP)
(72) Inventor: Zenno, Toru, Iwata-shi, Shizuoka-ken 438-8501 (JP)
(74) Representative: Grünecker, Kinkeldey, Stockmair & Schwanhäusser

(56) References cited:
- EP-A1- 1 826 439
- DE-A1- 4 229 024
- DE-A1- 4 419 633
- US-A1- 2006 116 241

## Description

### Technical Field

The present invention relates to a control device and a control method for a transmission mechanism of a vehicle with an engine, and a vehicle with an engine, and in particular to controlling engagement of a clutch in a vehicle with an engine including a clutch and a transmission each of which is driven by an actuator. A control device according to the preamble of claim 1 and control methods according to the preambles of claims 8 and 9 are known from US 2006/116241 A1.

### Background

A vehicle with an engine has been already put to practical use that includes a clutch and a transmission driven by an actuator such as a motor. The main object of this is to automatically make a series of transmission operations such as clutch disengagement, gear shifts, and clutch reengagement only with an input of a transmission command by a rider.

When such a vehicle with an engine starts traveling from a standstill state, accelerator operation by a rider and a rotational speed of the engine are detected, a clutch position is changed according to a result of the detection, and the clutch is shifted from the disengaged state to the engaged state. For example, JP-A-2006-170229 discloses that starting control is started in the case that the accelerator opening becomes larger than a prescribed opening in starting the vehicle and that the clutch is moved and engaged as the engine speed increases.

Focusing on the state of the clutch, the starting control disclosed in JP-A-2006-170229 is control to make a shift from a state that the clutch is disengaged to a state that the clutch is engaged. Such control is typically used in starting the vehicle. However, such control is required not only in starting.

In other words, there is a case that the clutch is engaged to make a shift from a state that the clutch is kept disengaged, in spite of the fact that the vehicle is traveling at a certain speed, to a state that the vehicle travels with power of the engine. Such a situation does not frequently occur. However, there may be, for example, a case that the vehicle stops or decelerates on a downhill, the clutch is disengaged, and thereafter the vehicle starts powered traveling while it is traveling with momentum, or a case that the engine stops and the clutch is disengaged in traveling for some reason such as turning off of a main key and thereafter the main key is turned on again while traveling with momentum, and so forth.

In such a situation, the rotational speed on a downstream side of the clutch, i.e., the rotational speed on a side of a driving wheel can become higher when the clutch is engaged than the rotational speed on an upstream side of the clutch, i.e., the rotational speed on a side of the engine. In this case, if the starting control disclosed in JP-A-2006-170229 is used, the rotational speed on the downstream side of the clutch and further the rotational speed of the driving wheel decrease when the clutch is engaged, because the rotational speed on the downstream side of the clutch is not taken into consideration in the control. This results in a problem that braking force is applied to the vehicle and riding comfort of the rider deteriorates.

The present invention is made in consideration of such a problem, and an object is to perform control with riding comfort in the case that a clutch is shifted from a disengaged state to an engaged state while the vehicle is traveling in a vehicle with an engine including a clutch and a transmission that are actuated by an actuator such as a motor.

### Summary

In accordance with a first aspect, the present invention provides a control device according to claim 1. Such a control device for a transmission mechanism of a vehicle with an engine including a clutch and a transmission each of which is driven by an actuator, includes, inter alia, an engagement control part for performing control to actuate the clutch from an engaged state to a disengaged state; and a determination part for determining whether or not to restrict engagement of the clutch based on information about a rotational speed on an upstream side of the clutch and information about a rotational speed on a downstream side of the clutch, in which the engagement control part is arranged to restrict operation to engage the clutch if the determination part determines to restrict engagement of the clutch when the engagement control part performs control to actuate the clutch to the engaged state.

In accordance with a second aspect, the present invention also provides a control method according to claim 8. Such a control method for a transmission mechanism of a vehicle with an engine including a clutch and a transmission each of which is driven by an actuator, includes, inter alia, an engagement control step of performing control to actuate the clutch from an engaged state to a disengaged state; and a determination step of determining whether or not to restrict engagement of the clutch based on information about a rotational speed on an upstream side of the clutch and information about a rotational speed on a downstream side of the clutch, in which the engagement control step includes restricting operation to engage the clutch if the determination step determines to restrict engagement of the clutch when control to actuate the clutch to the engaged state is performed.

In accordance with a third aspect, the present invention further provides a control method according to claim 9. Such a control method for a vehicle with an engine having a transmission mechanism including a clutch and a transmission each of which is driven by an actuator, includes, inter alia, an engagement control step of performing control to actuate the clutch from an engaged state to a disengaged state; and a determination step of determining whether or not to restrict engagement of the clutch based on information about a rotational speed on an upstream side of the clutch and information about a rotational speed on a downstream side of the clutch, in which the engagement control step includes restricting operation to engage the clutch if the determination step determines to restrict engagement of the clutch when control to actuate the clutch to the engaged state is performed.

In accordance with a fourth aspect, the present invention also provides a vehicle with an engine compnsing the control device for a transmission mechanism according to the first aspect of the present invention.

Accordingly, the control device and the control method for a transmission mechanism, and the control method for a vehicle with an engine, allow control with riding comfort that a rider does not perceive generation of braking force when a clutch is shifted from a disengaged state to an engaged state while the vehicle is traveling in a vehicle with an engine including a clutch and a transmission that are driven by an actuator such as a motor.

### Brief Description of the Drawings

Embodiments of the invention are described below, by way of example only, with reference to the drawings.
FIG. 1 is an external side view of a motorcycle in accordance with an embodiment of the present invention.
FIG. 2 shows a construction of handlebars.
FIG. 3 is a schematic drawing showing a construction of a transmission mechanism.
FIG. 4 is a block diagram of a control system.
FIG. 5 is a diagram showing a construction of a group of sensors and switches.
FIG. 6 is a flowchart of an algorithm executed in performing control to shift a clutch from a disengaged state to an engaged state.
FIG. 7 is a table indicating the relationship between a downstream converted rotational speed and a prescribed value.
FIG. 8 is a diagram showing a clutch actuator position control map.
FIG. 9 is a diagram illustrating a behavior of the motorcycle in a case that it is determined that braking force is not generated on the motorcycle.
FIG. 10 is a diagram explaining about correction to the clutch actuator position control map.
FIG. 11 is a diagram illustrating a behavior of the motorcycle in a case that it is determined that braking force is generated on the motorcycle.

While the invention is susceptible to various modifications and alternative forms, specific embodiments are shown by way of example in the drawings and are herein described in detail. It should be understood, however, that the drawings and detailed description are not intended to limit the invention to the particular form disclosed.

### Detailed Description

An embodiment of the present invention will be described hereinafter in detail with reference to the drawings.

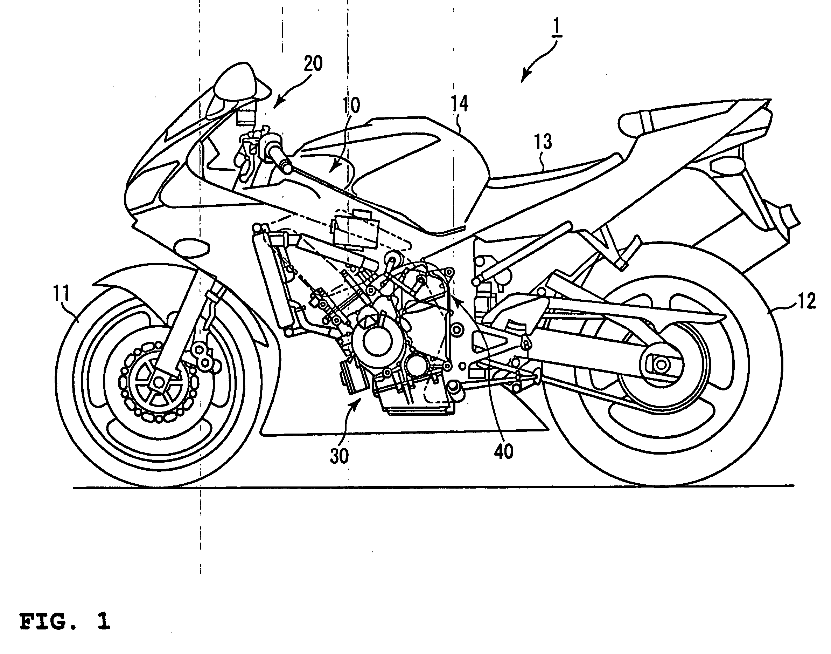

FIG. 1 is an external side view of a motorcycle in accordance with an embodiment of the present invention. A construction of a motorcycle 1 shown in the figure is generally similar to widely known motorcycles. The motorcycle 1 is constructed with a vehicle body frame 10, a front wheel 11 as a steering wheel, a rear wheel 12 as a driving wheel, a seat 13 on which a rider is seated, a fuel tank 14, handlebars 20, an engine 30, a transmission mechanism 40, and so forth. A motorcycle is described herein as an example of a vehicle with an engine. However, the present invention is not limited thereto, but the present invention may be suitably applied to various types of vehicle such as an ATV (All Terrain Vehicle), a three-wheeled or four-wheeled buggy, and a snowmobile.

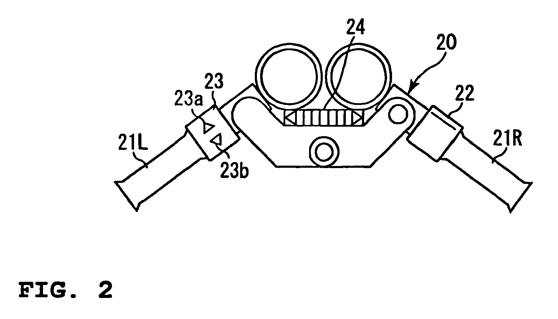

FIG. 2 shows a construction of the handlebars 20. A right grip 21R of the handlebars 20 shown in the figure is an accelerator grip. The rider rotates the right grip 21 R, thereby inputting a command about an accelerator opening. An accelerator opening detector 22 is placed on the right grip 21R and detects the accelerator opening commanded by the rider. A shift switch 23 is placed on a left grip 21L of the handlebars 20. A shift-up switch 23a and a shift-down switch 23b are provided in the shift switch 23. The rider manually operates the switches, thereby shifting the gear positions of the transmission mechanism 40 stepwise between the neutral position and the highest gear position. An indicator 24 for indicating a present gear position is provided at a center of the handlebars 20.

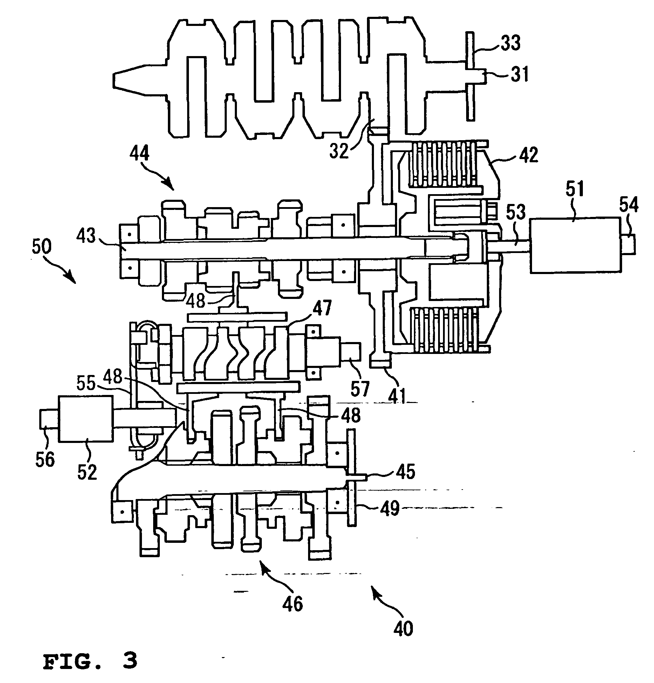

FIG. 3 is a schematic drawing showing a construction of the transmission mechanism 40. Power generated by the engine 30 is transmitted to a primary driven gear 41 provided in the transmission mechanism 40 via a primary drive gear 32 provided on a crankshaft 31. An engine tachometer 33 is mounted at an end of the crankshaft 31. The gear ratio between the primary drive gear 32 and the primary driven gear 41 is called "primary reduction gear ratio".

Power input to the primary driven gear 41 is transmitted to a main shaft 43 via a clutch 42. A wet type multiple disc clutch is shown as the clutch 42 in the figure. However, the clutch 42 is not limited thereto, and various types of a known clutch such as a dry type clutch and a single disc clutch may be suitably used. Multiple speed changing gears 44 are provided on the main shaft 43. The speed changing gears 44 are engaged with speed changing gears 46 provided on a drive shaft 45. Although FIG. 3 shows the speed changing gears 44 and 46 as if they were spaced from each other, they are actually engaged with each other as described above. Power is transmitted from the main shaft 43 to the drive shaft 45 via only a selected pair of speed changing gears 44 and 46. The remaining speed changing gears 44 and 46 idle. A shift cam 47 is rotated and a shift fork 48 is actuated, thereby selecting a pair of the speed changing gears 44 and 46 for power transmission. The main shaft 43, the speed changing gears 44, the drive shaft 45, the speed changing gears 46, the shift cam 47, and the shift fork 48 described above construct a transmission 50 known as a dog clutch type transmission. A transmission of other types such as a synchromesh type may be used as well.

Power transmitted to the drive shaft 45 is transmitted to the rear wheel 12 via a widely known power transmission mechanism (not shown) such as chain mechanism, belt mechanism, and drive shaft mechanism, and used as driving force of the motorcycle 1. The rotational speed ratio between the drive shaft 45 and the rear wheel 12 provided by the power transmission mechanism is known as "secondary reduction gear ratio". A drive shaft tachometer 49 is mounted at an end of the drive shaft 45.

In the transmission mechanism 40 in this embodiment, the clutch 42 and the transmission 50 are driven by a clutch actuator 51 and a shift actuator 52. The clutch actuator 51 expands and contracts a rod 53, and makes the clutch 42 disengaged, engaged, or half-engaged. A clutch actuator position detector 54 for detecting a position of the clutch actuator 51 is placed on the clutch actuator 51. The shift actuator 52 rotates a shift arm 55 and rotates the shift cam 47 by a prescribed angle, thereby shifting the gears of the transmission 50 up or down. A potentiometer 56 for detecting a rotational angle of the shift actuator is placed on the shift actuator 52. A shift position detector 57 for detecting a present gear position is mounted at an end of the shift cam 47. Known electric motors such as servomotor and stepping motor and known actuators such as hydraulic motor and hydraulic cylinder can be preferably used for the clutch actuator 51 and the shift actuator 52. In FIG. 3, the clutch actuator 51 and the shift actuator are directly connected to the rod 53 and the shift arm 55, respectively. However, the connection may be properly made via gear mechanism, linkage mechanism, and so forth. Further, known sensors such as rotary encoder and linear encoder can be used for the clutch actuator position detector 54, and such as potentiometer, photoswitch, and proximity switch can be used for the shift position detector 57.

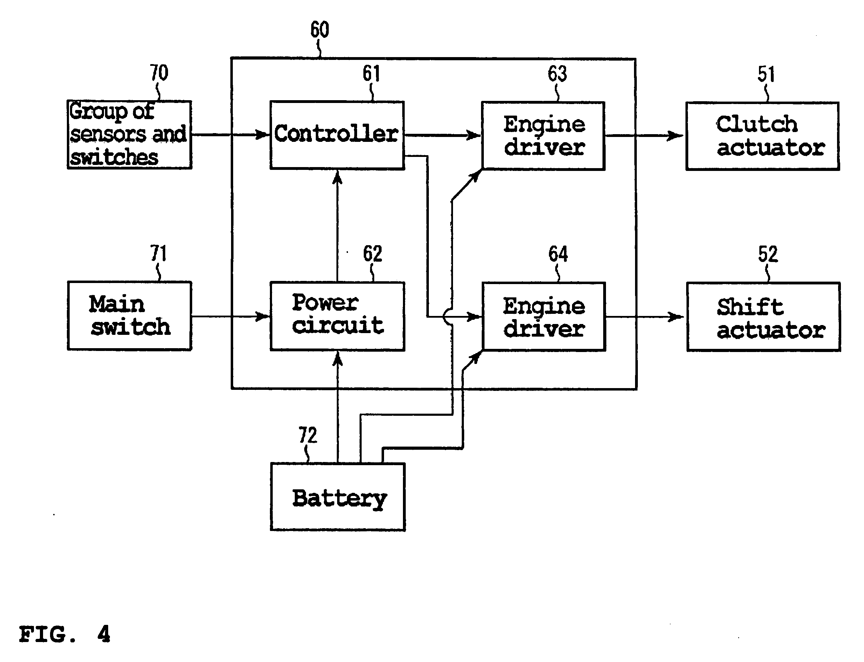

FIG. 4 is a block diagram of a control system installed in the motorcycle 1. A group of sensors and switches 70, a main switch 71 to be turned on in response to a key switch, a battery 72 for supplying electric power to a control device 60, the clutch actuator 51, and the shift actuator 52 are connected to the control device 60.

The control device 60 includes a controller 61 constructed with a known computer such as DSP (Digital Signal Processor) and microcontroller, a power circuit 62, and motor drivers 63 and 64. The controller 61 outputs a signal to the motor drivers 63 and 64 based on various information indicating a state of each part of the motorcycle 1 input from the group of sensors and switches 70 and a command from the rider, and actuates the clutch actuator 51 and the shift actuator 52, thereby controlling the transmission mechanism 40. A program for causing the controller 61 to operate is provided by a nonvolatile memory such as ROM and flash memory built in the controller 61. The power circuit 62 adjusts voltage, current, and so forth of power supplied from the battery 72 in response to the main switch 71 and supplies the power to the controller 61. The motor driver 63 is supplied with power from the battery 72 and actuates the clutch actuator 51 in response to a signal output from the controller 61. The motor driver 64 actuates the shift actuator 52 in the same way.

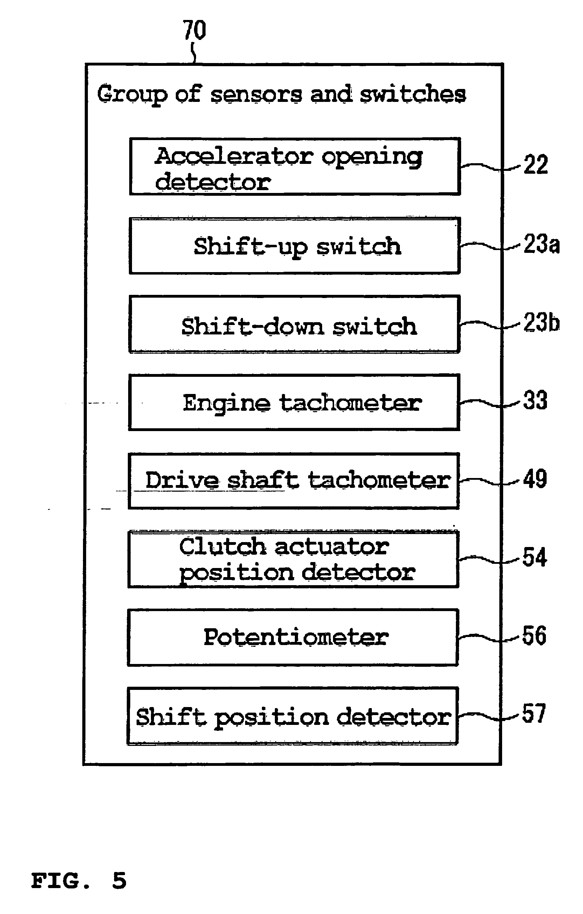

FIG. 5 is a diagram showing a construction of the group of sensors and switches 70 connected to the control device 60. The group of sensors and switches 70 include the accelerator opening detector 22, the shift-up switch 23a, the shift-down switch 23b, the engine tachometer 33, the drive shaft tachometer 49, the clutch actuator position detector 54, the potentiometer 56, and the shift position detector 57. Information obtained from the group of sensors and switches 70 is constantly input to the controller 61.

Descriptions will be made hereinafter in detail about control of the transmission mechanism in shifting the clutch 42 from the disengaged state to the engaged state in the motorcycle 1 having the construction described above.

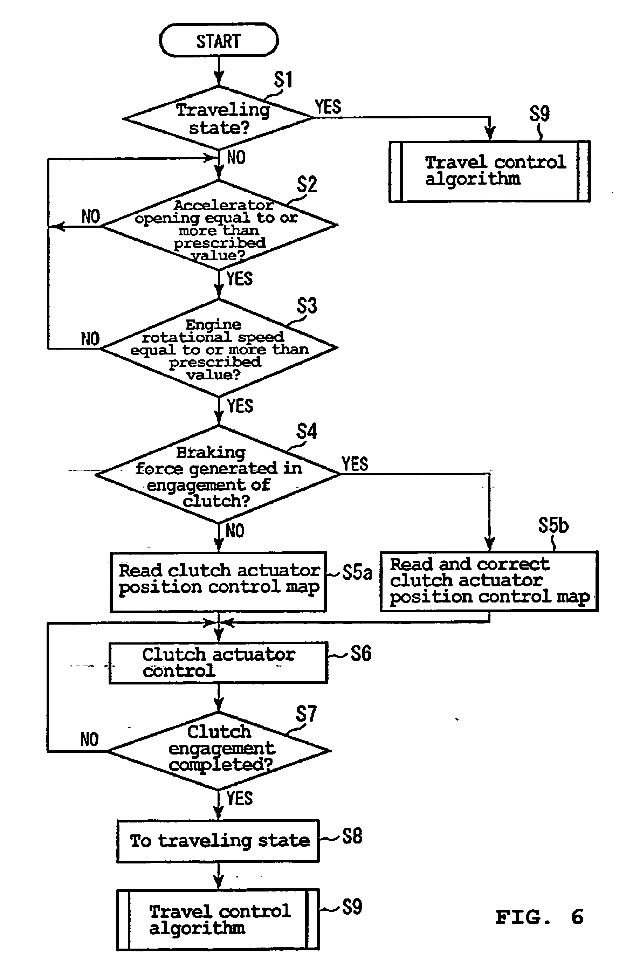

FIG. 6 is a flowchart of an algorithm executed when the control device 60 performs control to shift the clutch 42 from the disengaged state to the engaged state. Description will be made along the flowchart. First, the control device 60 determines whether or not the motorcycle 1 is in a traveling state (step S1). The control device 60 has a flag therein for storing whether or not the motorcycle 1 is in the traveling state. The determination is made by checking contents of the flag. The flag indicates that the motorcycle 1 is not in the traveling state immediately after turning the key switch on from the standstill state. In addition, the flag indicates that the motorcycle 1 is not in the traveling state if a prescribed condition is satisfied, such as that the traveling speed becomes a prescribed value, for example, a speed of 3 km/h or less. The control device 60 executes a control algorithm for traveling state (step S9) for performing control in the traveling state in the case that the motorcycle 1 is in the traveling state, and goes to step S2 in the case that the motorcycle 1 is not in the traveling state.

The clutch 42 is disengaged in the case that the motorcycle 1 is not in the traveling state. A condition for starting control to engage the clutch 42 from that state is that the rider rotates the right grip 21R, the accelerator opening becomes an accelerator opening threshold value or larger (step S2), and further thereby the engine rotational speed becomes an engine rotational speed threshold value (for example, 1300 [rpm]) or higher (step S3).

If the condition is satisfied, the control device 60 determines whether or not it restricts engagement of the clutch 42 (step S4). A program for making the control device 60 execute the determination realizes a determination part for determining whether or not to restrict engagement of the clutch 42 with software. The determination is made with a determination as to whether or not the rotational speed on a downstream side of the clutch 42 is higher by a prescribed value or more than the rotational speed on an upstream side of the clutch 42 based on information about the rotational speed on the upstream side of the clutch 42 and information about the rotational speed on the downstream side of the clutch 42. In other words, the downstream side of the clutch 42 is connected to the rear wheel 12 via the transmission 50 and the power transmission mechanism (not shown). Therefore, the rotational speed on the downstream side of the clutch 42 corresponds to the speed of the motorcycle 1. On the other hand, the rotational speed on the upstream side of the clutch 42 corresponds to the rotational speed of the engine 30. Therefore, if an attempt to engage the clutch 42 is made with the rotational speed of the downstream side of the clutch 42 higher than the rotational speed on the upstream side of the clutch 42, the rotational speed on the downstream side of the clutch 42 decreases and the rotational speed on the upstream side of the clutch 42 increases. Engagement is completed in a state that both the rotational speeds coincide with each other. As a result, the speed of the motorcycle 1 decreases. Meanwhile, the rotational speed of the engine 30 increases. This generates braking force on the motorcycle 1. Actually, if the rotational speed on the upstream side of the clutch 42 is close to the rotational speed on the downstream side, the difference is smoothly absorbed in a process of engagement of the clutch 42, and the rider hardly perceives braking force acting. Accordingly, it is advisable that the determination as to whether or not to restrict engagement of the clutch 42 be made with a determination as to whether or not the rider perceives braking force acting, in other words, whether or not the rotational speed on the downstream side of the clutch 42 is higher by a prescribed value or more than the rotational speed on the upstream side of the clutch 42, when the clutch 42 is engaged.

More specifically, the control device 60 makes the determination described above using an upstream converted rotational speed Ru, which is the rotational speed on the upstream side of the clutch 42 converted into the rotational speed of the engine 30, and a downstream converted rotational speed Rd, which is the rotational speed on the downstream side of the clutch 42 converted into the rotational speed of the engine 30. An output value of the engine tachometer 33, which is information about the rotational speed on the upstream side of the clutch 42, can be used as it is for the upstream converted rotational speed Ru. On the other hand, the downstream converted rotational speed Rd can be obtained using the drive shaft tachometer 49 provided for detecting the vehicle speed. Its output value, which is information about the rotational speed on the downstream side of the clutch 42, is multiplied by a present gear ratio of the transmission 50 and the primary reduction gear ratio, thereby obtaining the downstream converted rotational speed Rd. The present gear ratio of the transmission 50 can be obtained by detecting the gear position with the shift position detector 57. Depending on whether a rotational speed difference between the downstream converted rotational speed Rd and the upstream converted rotational speed Ru, ΔR = Rd - Ru, is a prescribed value Rc or more, in other words, in the case that the inequality: Δ R > Rc (1) is satisfied, it can be determined to restrict engagement of the clutch 42. In the case that the inequality is not satisfied, it can be determined not to restrict engagement of the clutch 42.

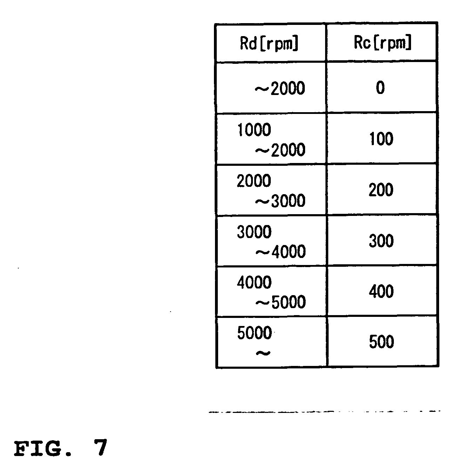

The prescribed value Rc can be an arbitrary value equal to or larger than 0, for example, 100 [rpm]. However, braking force acting on the motorcycle 1 can differ even if the rotational speed difference ΔR is the same value depending on the downstream converted rotational speed Rd. Therefore, it is preferable that the prescribed value Rc be set according to the downstream converted rotational speed Rd. For example, the prescribed value Rc can be set using a table shown in FIG. 7. In addition, the downstream converted rotational speed Rd may be multiplied by an arbitrary coefficient α: Rc = αRd (2) to determine the prescribed value Rc. The coefficient α can be 0.1, for example. The upstream converted rotational speed Ru and the downstream converted rotational value Rd are herein converted into the rotational speed of the engine 30. However, arbitrary converted values may be used instead such as converted values to the rotational speed of the main shaft 43 and the speed of the motorcycle 1. In this embodiment, the upstream converted rotational speed Ru and the downstream converted rotational speed Rd are obtained by calculation of output values of the engine tachometer 33 and the drive shaft tachometer 49, respectively. However, instead of this, tachometers may be separately mounted on parts upstream and downstream of the clutch 42, thereby directly measuring the rotational speeds.

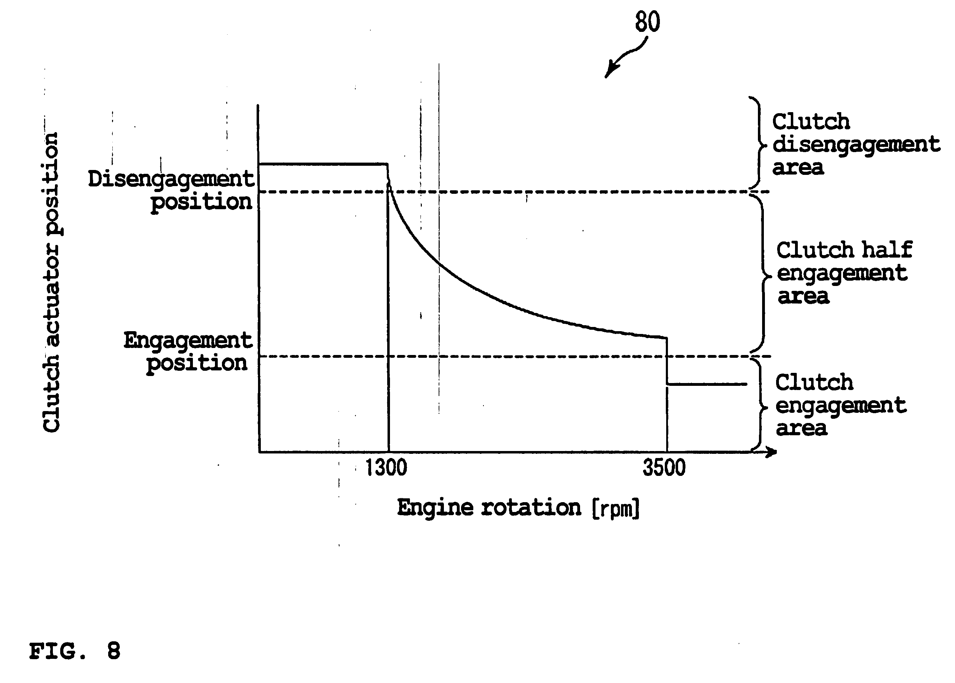

If it is determined not to restrict engagement of the clutch 42 in step S4, the control device 60 reads a clutch actuator position control map 80 shown in FIG. 8 from a memory such as ROM (not shown) (step S5a). The clutch actuator position control map 80 shows the relationship between the rotational speed of the engine 30 and the clutch actuator position. The map has the rotational speed of the engine 30 as the horizontal axis and the clutch actuator position as the vertical axis and indicates the relationship between them with lines. In the map, the clutch 42 is completely disengaged and idling in the case that the clutch actuator position is in a clutch disengagement area above a disengagement position. The clutch 42 is completely engaged and rotates without sliding in the case that the clutch actuator position is in a clutch engagement area below an engagement position. In the case that the clutch actuator position is in a half engagement area between the disengagement area and the engagement area, the clutch 42 is in a so-called half-engaged state and transmits torque while sliding.

Next, the control device 60 controls the clutch actuator 51 based on the read clutch actuator position control map 80 (step S6). Specifically, the control device 60 detects the present rotational speed of the engine 30 by the engine tachometer 33 and obtains a target clutch actuator position with reference to the clutch actuator position control map 80. Next, the control device 60 actuates the clutch actuator 51 so that it comes to the target clutch actuator position. A program for making the control device 60 execute the control realizes an engagement control part for performing control to actuate the clutch 42 from the disengaged state to the engaged state with software.

The control device 60 keeps making the control until engagement of the clutch 42 is completed, in other words, the clutch actuator position detector 54 detects that the clutch 42 is in a position that it is engaged (step S7). If engagement of the clutch 42 is completed, the control device 60 rewrites the internal flag with contents indicating that the motorcycle 1 is in the traveling state (step S8) and executes the control algorithm for traveling state (step S9).

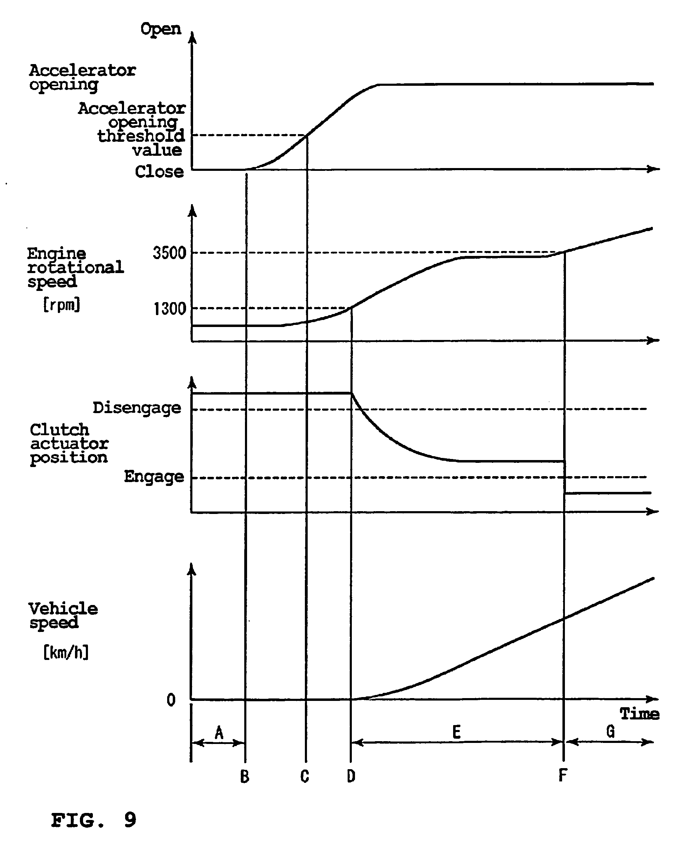

FIG. 9 is a diagram illustrating the behavior of the motorcycle 1 in the case that it is determined not to restrict engagement of the clutch 42 as described above. Horizontal axes of the diagrams commonly represent time. They are diagrammatic drawings indicating changes in the accelerator opening, the engine rotational speed, the clutch actuator position, and the vehicle speed, in this order from the top. Description will be herein made about a case that the vehicle starts from the standstill state as an exemplary case not to restrict engagement of the clutch 42.

First, a section represented by an area (A) in the figure indicates a state that the motorcycle 1 stands still. At this point, the rider has not rotated the right grip 21R and the accelerator opening is in the fully closed position. The engine 30 is in the idling state. The clutch 42 is disengaged. The vehicle speed is 0 since the motorcycle stands still.

Now, when the rider starts rotating the right grip 21R to start the motorcycle 1 ((B) in the figure), the engine rotational speed increases with slight delay. When the accelerator opening becomes the accelerator opening threshold value or larger ((C) in the figure), and further the engine rotational speed exceeds the engine rotational speed threshold value (1300 [rpm] in this case)((D) in the figure), the control device 60 determines whether or not to restrict engagement of the clutch 42. The vehicle speed is 0 in this case, and the downstream converted rotational speed Rd is of course 0. Thus,
Δ R = Rd - Ru = -1300 [rpm]
Meanwhile,
Rc = 0 [rpm]
Therefore, (see FIG. 7)
Δ R < Rc

Therefore, the inequality (1) is not satisfied, and it is determined not to restrict engagement of the clutch 42.

Next, the control device 60 reads the clutch actuator position control map 80 and controls the clutch 42 so that it becomes the half-engaged state according to the engine rotational speed. Thereby, the motorcycle 1 smoothly starts and gradually increases its speed (area (E) in the figure).

When the engine rotational speed has sufficiently increased (3500 [rpm] in this case), the clutch 42 is completely engaged ((F) in the figure). At this point, the control device 60 determines that engagement of the clutch 42 has been completed. Thereafter, the control device 60 shifts to control for traveling state by the control algorithm for traveling state (area (G) in the figure).

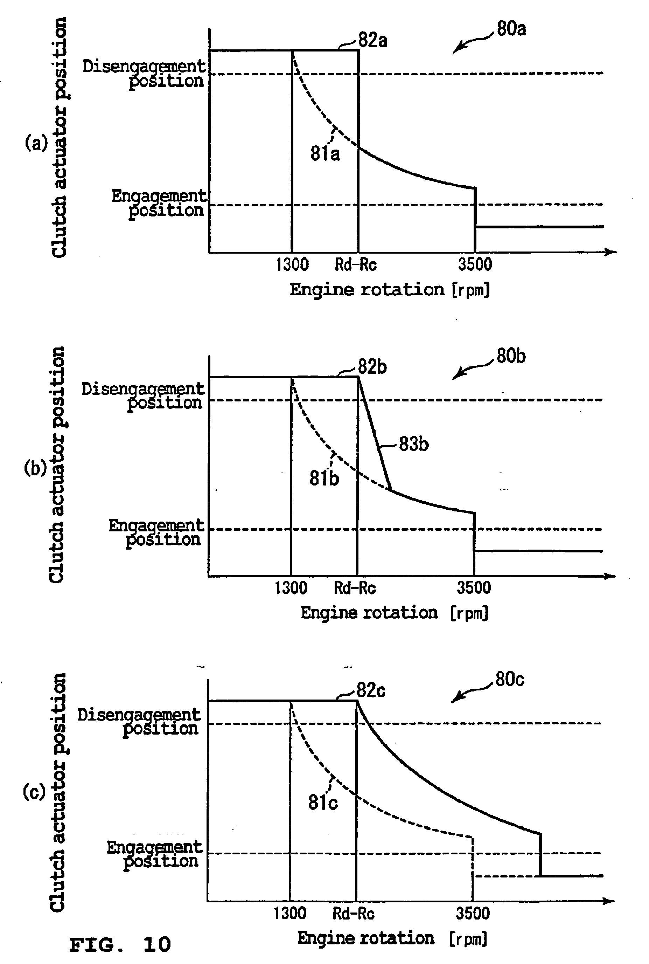

Next, returning to FIG. 6, description will be made about a case that it is determined to restrict engagement of the clutch 42 in step S4. In this case, the control device 60 goes to step S5b, reads the clutch actuator position control map 80, and makes correction. FIG. 10(a) is a diagram explaining about correction to the clutch actuator position control map 80. The control device 60 rewrites an area represented by a dashed line 81a as indicated by a thick line 82a, and retains the clutch 42 in the disengaged state until the rotational speed of the engine 30 exceeds (Rd - Rc), thereby restricting operation to engage the clutch 42. This is because braking force is generated on the motorcycle 1 if the clutch 42 is engaged in the case that the rotational speed of the engine 30 is below (Rd - Rc) according to the inequality (1). A clutch actuator position control map 80a that has been corrected can be obtained in the manner described above.

Correction to the clutch actuator position control map 80 may be made in a manner indicated by a clutch actuator position control map 80b shown in FIG. 10 (b). The position of the clutch 42 represented by an area of a dashed line 81 b in the figure is rewritten as indicated by a thick line 82b until the rotational speed of the engine 30 exceeds (Rd - Rc). After that area, the line is connected to a line before the correction with a line 83b with a prescribed slope. Thereby, operation to engage the clutch 42 may be restricted. Differently, as in the clutch actuator position control map 80c shown in FIG. 10(c), an area represented by a dashed line 81c is rewritten as indicated by a thick line 82c, and the clutch actuator position control map 80 itself is shifted to a side that the rotational speed of the engine 30 is high. Thereby, engagement may be restricted in a manner such that operation to engage the clutch 42 is restricted until the rotational speed of the engine 30 exceeds (Rd - Rc). Simply the downstream converted rotational speed Rd may be used as a threshold value for restriction of operation to engage the clutch 42 instead of (Rd - Rc) described above.

After correction, the control device 60 goes to step S6 in FIG. 6 and performs control of the clutch actuator 51 based on the corrected clutch actuator position control map 80a. Steps after this point are the same as described above, and description will not be made.

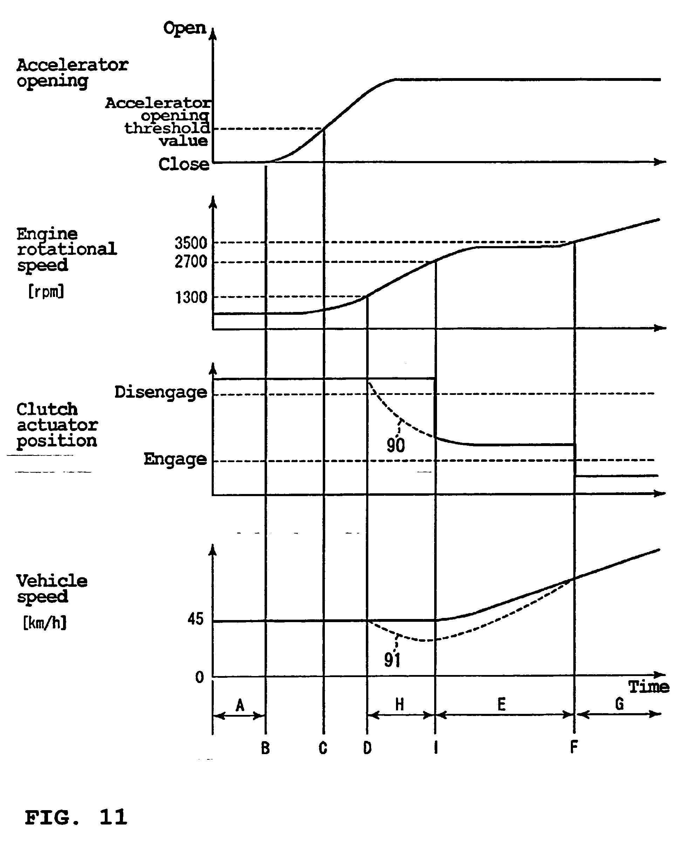

FIG. 11 is a diagram illustrating the action of the motorcycle 1 in the case that it is determined to restrict engagement of the clutch 42. In the figure, horizontal axes of the diagrams commonly represent time similarly to FIG. 9. They are diagrammatic drawings indicating changes in the accelerator opening, the engine rotational speed, the clutch actuator position, and the vehicle speed, in this order from the top.

In this case, in an initial state, the accelerator opening is in the fully closed position, the clutch 42 is disengaged, the engine 30 is in the idling state, and the motorcycle 1 is traveling with momentum at a speed of 45 [km/h] (area (A)) for some reason.

It is assumed that the primary reduction gear ratio of the motorcycle 1 is 2.0, the present gear position of the transmission 50 is the second gear with a gear ratio of 2.0, the secondary reduction gear ratio is 2.0, and an outer circumference of the rear wheel is 2 [m] for an example for description. In this case, the downstream converted rotational speed Rd is
Rd = 45 × (1000 / 60) ÷ 2 × 2.0 × 2.0 × 2.0 = 3000 [rpm] Referring to FIG. 7, the prescribed value Rc in this case is
Rc = 300 [rpm]

Now, if the rider rotates the right grip 21R and the rotational speed of the engine 30 reaches 1300 [rpm], which is the engine rotational speed threshold value ((D) in the figure), the control device 60 determines whether or not braking force acts on the motorcycle 1 when the clutch 42 is engaged. In this case,
Δ R = Rd - Ru = 1700 [rpm]
Meanwhile,
Rc = 300 [rpm]
Δ R > Rc

This satisfies the inequality (1). Therefore, it is determined to restrict engagement of the clutch 42.

Then, the control device 60 reads and corrects the clutch actuator position control map 80. In this case, the clutch actuator position control map 80a shown in FIG. 10(a) is obtained by correction. A specific value for the value expressed as (Rd - Rc) in the figure is 2700 [rpm].

Again returning to FIG. 11, the control device 60 controls the clutch actuator 51 using the corrected clutch actuator position control map 80a. Therefore, the control device 60 restricts operation to engage the clutch 42 until the rotational speed of the engine 30 reaches 2700 [rpm] (area (H) in the figure) after the rotational speed of the engine 30 exceeds the engine rotational speed threshold value ((D) in the figure).

When the rotational speed of the engine 30 reaches 2700 [rpm], engagement of the clutch 42 is started ((I) in the figure). At this point, the rotational speeds on the sides upstream and downstream of the clutch 42 are close. Therefore, the motorcycle 1 smoothly starts acceleration as indicated in the figure. Accordingly, the rider does not perceive braking force being generated.

Thereafter, the clutch 42 is controlled so that it becomes the half-engaged state according to the engine rotational speed until the clutch 42 is completely engaged (area (E) in the figure). If the engine rotational speed sufficiently increases, the clutch 42 is completely engaged ((F) in the figure). After this point, the control device 60 shifts to the control for traveling state by the control algorithm for traveling state (area (G) in the figure).

The dashed lines represented by reference numerals 90 and 91 in FIG. 11 are referential lines indicating changes in the clutch actuator position and the vehicle speed of the motorcycle 1 in the case that the clutch actuator position control map 80 is used without any correction. In this case, as indicated by the dashed line 90, engagement of the clutch 42 is started at a point (D) in the figure. Therefore, as indicated by the dashed line 91, the speed of the motorcycle 1 temporarily decreases. Braking force generated at this point results in deterioration in riding comfort of the rider.

As described in the foregoing, the control device and control method for a transmission mechanism of a vehicle with an engine, and the vehicle with an engine, in accordance with the present invention allow control with riding comfort that the rider does not perceive generation of braking force when the clutch is shifted from the disengaged state to the engaged state while the vehicle is traveling.

### Description of Reference Numerals and Symbols

1: motorcycle, 10: vehicle body frame, 11: front wheel, 12: rear wheel, 13: seat, 14: fuel tank, 20: handlebars, 21R: right grip, 21L: left grip, 22: accelerator opening detector, 23: shift switch, 23a: shift-up switch, 23b: shift-down switch, 24: indicator, 30: engine, 31: crankshaft, 32: primary drive gear, 33: engine tachometer, 40: transmission mechanism, 41: primary driven gear, 42: clutch, 43: main shaft, 44: speed changing gear, 45: drive shaft, 46: speed changing gear, 47: shift cam, 48: shift fork, 49: drive shaft tachometer, 50: transmission, 51: clutch actuator, 52: shift actuator, 53: rod, 54: clutch actuator position detector, 55: shift arm, 56: potentiometer, 57: shift position detector, 60: control device, 61: controller, 62: power circuit, 63, 64: motor driver, 70: group of sensors and switches, 71: main switch, 72: battery, 80: clutch actuator position control map, 80a through c: corrected clutch actuator position control map.

## Claims

1. A control device (60) for a transmission mechanism (40) of a vehicle (1) with an engine (30) including a clutch (42) and a transmission (50) each of which is driven by an actuator, comprising:
an engagement control part for performing control to actuate the clutch (42) from an engaged state to a disengaged state; and
a determination part for determining whether or not to restrict engagement of the clutch (42) based on information about a rotational speed on an upstream side of the clutch (42) and information about a rotational speed on a downstream side of the clutch (42), wherein the engagement control part is arranged to restrict operation to engage the clutch (42) if the determination part determines to restrict engagement of the clutch (42) when the engagement control part performs control to actuate the clutch (42) to the engaged state;
**characterized in that**
the determination part is arranged to determine to restrict engagement of the clutch (42) in the case that the rotational speed on the downstream side of the clutch (42) is higher by at least a prescribed value than the rotational speed on the upstream side of the clutch (42).

2. The control device (60) for a transmission mechanism (40) according to claim 1,
wherein the information about a rotational speed on the upstream side of the clutch (42) is a rotational speed of the engine (30).

3. The control device (60) for a transmission mechanism (40) according to claim 1 or 2,
wherein the information about a rotational speed on the downstream side of the clutch (42) is information about a speed of the vehicle (1).

4. The control device (60) for a transmission mechanism (40) according to claim 3,
wherein the information about a rotational speed on the downstream side of the clutch (42) is a rotational speed of a drive shaft.

5. The control device (60) for a transmission mechanism (40) according any one of claims 1 to 4,
wherein the prescribed value is set according to the information about the rotational speed on the downstream side of the clutch (42).

6. The control device (60) for a transmission mechanism (40) according to any one of claims 1 to 5,
wherein the engagement control part is arranged to restrict operation to engage the clutch (42) by retaining the clutch (42) in the disengaged state.

7. A vehicle (1) with an engine (30) comprising the control device (60) for a transmission mechanism (40) according to any one of claims 1 through 6.

8. A control method for a transmission mechanism (40) of a vehicle (1) with an engine (30) including a clutch (42) and a transmission (50) each of which is driven by an actuator, comprising:
an engagement control step of performing control to actuate the clutch (42) from an engaged state to a disengaged state; and
a determination step of determining whether or not to restrict engagement of the clutch (42) based on information about a rotational speed on an upstream side of the clutch (42) and information about a rotational speed on a downstream side of the clutch (42),
wherein the engagement control step includes restricting operation to engage the clutch (42) if the determination step determines to restrict engagement of the clutch (42) when control to actuate the clutch (42) to the engaged state is performed;
**characterized in that**
the determination step determines to restrict engagement of the clutch (42) in the case that the rotational speed on the downstream side of the clutch (42) is higher by at least a prescribed value than the rotational speed on the upstream side of the clutch (42).

9. A control method for a vehicle (1) with an engine (30) having a transmission mechanism (40) including a clutch (42) and a transmission (50) each of which is driven by an actuator, comprising:
an engagement control step of performing control to actuate the clutch (42) from an engaged state to a disengaged state; and
a determination step of determining whether or not to restrict engagement of the clutch (42) based on information about a rotational speed on an upstream side of the clutch (42) and information about a rotational speed on a downstream side of the clutch (42),wherein the engagement control step includes restricting operation to engage the clutch (42) if the determination step determines to restrict engagement of the clutch (42) when control to actuate the clutch (42) to the engaged state is performed;
**characterized in that**
the determination step determines to restrict engagement of the clutch (42) in the case that the rotational speed on the downstream side of the clutch (42) is higher by at least a prescribed value than the rotational speed on the upstream side of the clutch (42).

## Patentansprüche

1. Steuerungsvorrichtung (60) für eine Getriebevorrichtung (40) eines Fahrzeuges (1) mit einer Brennkraftmaschine (30), die eine Kupplung (42) und ein Getriebe (50) enthält, wobei jede durch einen Betätiger angetrieben wird, aufweisend:
ein Eingriffssteuerungsteil zum Ausführen einer Steuerung, um die Kupplung (42) aus einem Eingriffszustand in einen Außer- Eingriffs- Zustand zu betätigen; und
ein Feststellungsteil zum Feststellen, ob der Eingriff der Kupplung (42) zu begrenzen ist, oder nicht, auf der Grundlage einer Information über die Drehzahl auf einer stromaufseitigen Seite der Kupplung (42) und einer Information über die Drehzahl auf einer stromabwärtigen Seite der Kupplung (42), wobei das Eingriffssteuerungsteil vorgesehen ist, die Betätigung zu begrenzen, um die Kupplung (42) in Eingriff zu bringen, wenn das Feststellungsteil feststellt, den Eingriff der Kupplung (42) zu begrenzen, wenn das Eingriffssteuerungsteil die Steuerung ausführt, um die Kupplung (42) in den Eingriffszustand zu betätigen;
**dadurch gekennzeichnet, dass**
das Feststellungsteil vorgesehen ist festzustellen, den Eingriff der Kupplung (42) in dem Fall zu begrenzen, dass die Drehzahl auf der stromabwärtigen Seite der Kupplung (42) um zumindest einen vorgeschriebenen Wert höher als die Drehzahl auf der stromaufseitigen Seite der Kupplung (42) ist.

2. Steuerungsvorrichtung (60) für eine Getriebevorrichtung (40) nach Anspruch 1, wobei die Information über die Drehzahl auf der stromaufseitigen Seite der Kupplung (42) eine Drehzahl der Brennkraftmaschine (30) ist.

3. Steuerungsvorrichtung (60) für eine Getriebevorrichtung (40) nach Anspruch 1 oder 2, wobei die Information über eine Drehzahl auf der stromabwärtigen Seite der Kupplung (42) eine Information über eine Geschwindigkeit des Fahrzeuges (1) ist.

4. Steuerungsvorrichtung (60) für eine Getriebevorrichtung (40) nach Anspruch 3, wobei die Information über eine Drehzahl auf der stromabwärtigen Seite der Kupplung (42) eine Drehzahl der Antriebswelle ist.

5. Steuerungsvorrichtung (60) für eine Getriebevorrichtung (40) nach einem der Ansprüche 1 bis 4,
wobei der vorgeschriebene Wert entsprechend einer Information über die Drehzahl der stromabwärtigen Seite der Kupplung (42) festgelegt ist.

6. Steuerungsvorrichtung (60) für eine Getriebevorrichtung (40) nach einem der Ansprüche 1 bis 5,
wobei das Eingriffssteuerungsteil vorgesehen ist, die Betätigung, zum Eingriff der Kupplung (42) zu begrenzen, durch Zurückhalten der Kupplung (42) in dem Außer- Eingriffs- Zustand.

7. Fahrzeug mit einer Brennkraftmaschine (30), aufweisend eine Steuerungsvorrichtung (60) für eine Getriebevorrichtung (40) nach einem der Ansprüche 1 bis 6.

8. Steuerungsverfahren für eine Getriebevorrichtung (40) eines Fahrzeuges (1) mit einer Brennkraftmaschine (30), die eine Kupplung (42) und ein Getriebe (50) enthält, wobei jedes durch einen Betätiger angetrieben wird, aufweisend:
einen Eingriffssteuerungsschritt zum Ausführen der Steuerung, um die Kupplung (42) aus einem Eingriffszustand in einen Außer- Eingriffs- Zustand zu betätigen; und
einen Feststellungsschritt zum Feststellen, ob der Eingriff der Kupplung (42) zu begrenzen ist, oder nicht, auf der Grundlage einer Information über eine Drehzahl der stromaufseitigen Seite der Kupplung (42) und einer Information über eine Drehzahl auf einer stromabwärtigen Seite der Kupplung (42), wobei der Eingriffssteuerungsschritt das Begrenzen der Betätigung enthält, um die Kupplung (42) in Eingriff zu bringen, wenn der Feststellungsschritt feststellt, den Eingriff der Kupplung (42) zu begrenzen, wenn die Steuerung, um die Kupplung (42) in den Eingriffszustand zu betätigen, ausgeführt wird;
**dadurch gekennzeichnet, dass**
der Feststellungsschritt feststellt, den Eingriff der Kupplung (42) in dem Fall zu begrenzen, dass die Drehzahl auf der stromabwärtigen Seite der Kupplung (42) um zumindest einen vorgeschriebenen Wert höher ist, als die Drehzahl auf der stromaufseitigen Seite der Kupplung (42).

9. Steuerungsverfahren für ein Fahrzeug (1) mit einer Brennkraftmaschine (30), die eine Kupplung (42) und ein Getriebe (50) enthält, wobei jedes durch einen Betätiger angetrieben wird, aufweisend:
einen Eingriffssteuerungsschritt zum Ausführen der Steuerung, um die Kupplung (42) aus einem Eingriffszustand in einen Außer- Eingriffs- Zustand zu betätigen; und
einen Feststellungsschritt zum Feststellen, ob der Eingriff der Kupplung (42) zu begrenzt wird, oder nicht, auf der Grundlage einer Information über eine Drehzahl der stromaufseitigen Seite der Kupplung (42) und einer Information über eine Drehzahl auf einer stromabwärtigen Seite der Kupplung (42), wobei der Eingriffssteuerungsschritt das Begrenzen der Betätigung enthält, um die Kupplung (42) in Eingriff zu bringen, wenn der Feststellungsschritt feststellt, den Eingriff der Kupplung (42) zu begrenzen, wenn die Steuerung, um die Kupplung (42) in den Eingriffszustand zu betätigen, ausgeführt wird;
**dadurch gekennzeichnet, dass**
der Feststellungsschritt feststellt, den Eingriff der Kupplung (42) in dem Fall zu begrenzen, dass die Drehzahl auf der stromabwärtigen Seite der Kupplung (42) um zumindest einen vorgeschriebenen Wert höher ist. als die Drehzahl auf der stromaufseitigen Seite der Kupplung (42).

## Revendications

1. Dispositif de commande (60) pour un mécanisme de transmission (40) d'un véhicule (1) avec un moteur (30) comprenant un engrenage (42) et une transmission (50) entraînés chacun par un actionneur, comprenant :
une partie de commande d'accouplement pour réaliser une commande pour faire passer l'embrayage (42) d'un état accouplé à un état désaccouplé ; et
une partie de décision pour décider de limiter ou non l'accouplement de l'embrayage (42) sur la base d'informations sur une vitesse de rotation sur un côté amont de l'embrayage (42), et d'informations sur une vitesse de rotation sur un côté aval de l'embrayage (42), étant précisé que la partie de commande d'accouplement est conçue pour limiter le fonctionnement pour accoupler l'embrayage (42) si la partie de décision décide de limiter l'accouplement de l'embrayage (42), quand la partie de commande d'accouplement réalise une commande pour faire passer l'embrayage (42) à l'état accouplé ;
**caractérisé en ce que** la partie de décision est conçue pour décider de limiter l'accouplement de l'embrayage (42) dans le cas où la vitesse de rotation sur le côté aval de l'embrayage (42) est supérieure d'au moins une valeur prescrite à la vitesse de rotation sur le côté amont de l'embrayage (42).

2. Dispositif de commande (60) pour un mécanisme de transmission (40) selon la revendication 1, étant précisé que les informations sur une vitesse de rotation sur le côté amont de l'embrayage (42) sont constituées par une vitesse de rotation du moteur (30).

3. Dispositif de commande (60) pour un mécanisme de transmission (40) selon la revendication 1 ou 2, étant précisé que les informations sur une vitesse de rotation sur le côté aval de l'embrayage (42) sont constituées par des informations sur une vitesse du véhicule (1).

4. Dispositif de commande (60) pour un mécanisme de transmission (40) selon la revendication 3, étant précisé que les informations sur une vitesse de rotation sur le côté aval de l'embrayage (42) sont constituées par une vitesse de rotation d'un arbre moteur.

5. Dispositif de commande (60) pour un mécanisme de transmission (40) selon l'une quelconque des revendications 1 à 4, étant précisé que la valeur prescrite est fixée suivant les informations sur la vitesse de rotation sur le côté aval de l'embrayage (42).

6. Dispositif de commande (60) pour un mécanisme de transmission (40) selon l'une quelconque des revendications 1 à 5, étant précisé que la partie de commande d'accouplement est conçue pour limiter le fonctionnement pour accoupler l'embrayage (42), en retenant celui-ci dans l'état désaccouplé.

7. Véhicule (1) avec un moteur (30) comprenant le dispositif de commande (60) pour un mécanisme de transmission (40) selon l'une quelconque des revendications 1 à 6.

8. Procédé de commande pour un mécanisme de transmission (40) d'un véhicule (1) avec un moteur (30) comprenant un engrenage (42) et une transmission (50) entraînés chacun par un actionneur, comprenant :
une étape de commande d'accouplement pour réaliser une commande pour faire passer l'embrayage (42) d'un état accouplé à un état désaccouplé ; et
une étape de décision pour décider de limiter ou non l'accouplement de l'embrayage (42) sur la base d'informations sur une vitesse de rotation sur un côté amont de l'embrayage (42), et d'informations sur une vitesse de rotation sur un côté aval de l'embrayage (42), étant précisé que l'étape de commande d'accouplement comprend la limitation du fonctionnement pour accoupler l'embrayage (42) si l'étape de décision décide de limiter l'accouplement de l'embrayage (42) quand la commande pour faire passer l'embrayage (42) à l'état accouplé est réalisée ;
**caractérisé en ce que** l'étape de décision décide de limiter l'accouplement de l'embrayage (42) dans le cas où la vitesse de rotation sur le côté aval de l'embrayage (42) est supérieure d'au moins une valeur prescrite à la vitesse de rotation sur le côté amont de l'embrayage (42).

9. Procédé de commande pour un véhicule (1) avec un moteur (30) ayant un mécanisme de transmission (40) comprenant un engrenage (42) et une transmission (50) entraînés chacun par un actionneur, comprenant :
une étape de commande d'accouplement pour réaliser une commande pour faire passer l'embrayage (42) d'un état accouplé à un état désaccouplé ; et
une étape de décision pour décider de limiter ou non l'accouplement de l'embrayage (42) sur la base d'informations sur une vitesse de rotation sur un côté amont de l'embrayage (42), et d'informations sur une vitesse de rotation sur un côté aval de l'embrayage (42), étant précisé que l'étape de commande d'accouplement comprend la limitation du fonctionnement pour accoupler l'embrayage (42) si l'étape de décision décide de limiter l'accouplement de l'embrayage (42) quand la commande pour faire passer l'embrayage (42) à l'état accouplé est réalisée ;
**caractérisé en ce que** l'étape de décision décide de limiter l'accouplement de l'embrayage (42) dans le cas où la vitesse de rotation sur le côté aval de l'embrayage (42) est supérieure d'au moins une valeur prescrite à la vitesse de rotation sur le côté amont de l'embrayage (42).
